# EUROPÄISCHE PATENTSCHRIFT

(11) **EP 1 873 045 B1**
(45) Veröffentlichungstag und Bekanntmachung des Hinweises auf die Patenterteilung: **04.11.2009**
(21) Anmeldenummer: 07109071.6
(22) Anmeldetag: 29.05.2007
(51) Int. Cl.: B62D 65/06

(54) **Multiflexible Fertigungsanlage für aus mehreren Bauteilen zu fügende Zusammenbauten von Kraftfahrzeug-Karosserien**
Multi-flexible production facility for motor vehicle bodies assembled from several parts
Installation de fabrication multiflexible pour constructions par assemblage de plusieurs composants de carrosseries de véhicules automobiles

(30) Priorität: 29.06.2006 DE 102006030427
(43) Veröffentlichungstag der Anmeldung: 02.01.2008
(73) Patentinhaber: ThyssenKrupp Drauz Nothelfer GmbH, 74076 Heilbronn (DE)
(72) Erfinder: Klemm, Thomas, 55779, Heimbach (DE)
(74) Vertreter: Cohausz & Florack

(56) Entgegenhaltungen:
- EP-A- 1 147 974
- DE-A1- 4 111 545
- DE-U1- 20 211 755

## Beschreibung

Es ist eine bekannte Tatsache, dass die für einen bestimmten Typ von Kraftfahrzeugen ausgelegten Fertigungsanlagen bei Einführung eines neuen Typs erst nach einer gewissen Anlaufphase ihre volle Ausbringung erreichen und bei einem bevorstehenden Typenwechsel in der Auslastung wieder abnehmen. Ein solcher Betrieb einer Fertigungsanlage ist nicht wirtschaftlich. Deshalb gibt es Überlegungen, wie die Wirtschaftlichkeit der Fertigungsanlage in der Anlaufphase und der Endphase eines Typs verbessert werden kann.

Darüber hinaus ist es nur in ganz beschränktem Maße möglich, über eine Fertigungsanlage verschiedene Fahrzeugtypen oder Bauteiltypen (im Folgenden kurz "Typen" genannt) laufen zu lassen. Für die Auslastung einer Fertigungsanlage wäre es deshalb auch wünschenswert, sie im Mix mit verschiedenen Typen zu betreiben.

Die Bearbeitung von verschiedenen Bauteiltypen im freien Mix ist in beschränktem Maße mit einer bekannten Fertigungsanlage (DE 298 13 669 U1) möglich. Bei dieser Fertigungsanlage werden die verschiedenen Bauteiltypen über getrennte nebeneinander oder übereinander angeordnete Bauteilzuführungen zugeführt. Mittels eines mehrachsigen Transportroboters werden die Bauteiltypen auf einzelne Transportwagen übergeben, die quer zur Materialflussrichtung hin- und-her verfahrbar sind, so dass jeweils ein Transportwagen mit einem Bauteiltyp sich an einem Bearbeitungsplatz befindet, während der oder die anderen sich in Ruheposition befinden. Jeder Bauteiltyp ist auf dem Transportwagen in einem Unterwerkzeug zentriert gehalten, das mit einem als Greifer ausgebildeten Oberwerkzeug eine Spannvorrichtung bildet. Der Greifer ist an einem Roboter lösbar angekuppelt. Der Platzbedarf einer solchen Fertigungsanlage hängt von der Anzahl der zu bearbeitenden Bauteiltypen ab. Hinzu kommt, dass für das Querverfahren der Transportwagen viel Platz benötigt wird. Aus diesem Grunde ist mit einer solchen Fertigungsanlage mit vertretbarem apparativen Aufwand und Stellflächenbedarf die Fertigung einer Vielzahl von Bauteiltypen im simultanen Mix möglich.

Bei einer anderen bekannten Fertigungsanlage für Typverschiedene Bauteile (DE 203 04 022 U1) sind entlang einer Transferlinie Bearbeitungsstationen angeordnet, die jeweils mehrere Arbeitsstellen für verschiedene Bauteiltypen aufweisen. Um an diesen verschiedenen Arbeitsstellen Bearbeitungen an den Bauteilen vornehmen zu können, sind auf Fahrachsen längs der Transferlinie verfahrbare Bearbeitungsroboter angeordnet. Auf diesen Fahrachsen sind auch verfahrbare Handlingsroboter angeordnet, mit denen die Bauteile den verschiedenen Arbeitsstellen zu- und von ihnen abführbar sind. Bei dieser Fertigungsanlage wird viel Stellfläche für die längs der Fahrachse verfahrbaren Bearbeitungsroboter und die Arbeitsstellen für die verschiedenen Bauteiltypen benötigt. Zwar lässt sich durch eine entsprechend hohe Anzahl von Bearbeitungsstellen eine Mehrzahl von Bauteiltypen bearbeiten, doch ist der Stellflächenbedarf dafür sehr hoch.

DE 411 1 545 A offenbart eine Fertigungsanlage gemäß dem Oberbegriff des Anspruchs 1.

Vor diesem Hintergrund besteht die Aufgabe der Erfindung darin, eine multiflexible Fertigungsanlage für Zusammenbauten von Kraftfahrzeug-Karosserien zu schaffen, die die simultane Fertigung verschiedener Typen ermöglicht.

Diese Aufgabe der Erfindung wird gelöst mit einer multiflexiblen Fertigungsanlage für aus mehreren Bauteilen zu fügende Zusammenbauten von Kraftfahrzeug-Karosserien oder Karosserie-Komponenten mit einem Drehtisch, auf dem an mehreren Arbeitsplätzen Aufnahme- und Spannvorrichtungen für gleiche oder unterschiedliche Typen von Zusammenbauten auswechselbar angeordnet sind, mit einer neben dem Drehtisch angeordneten Wechselstation, mit der eine Aufnahme- und Spannvorrichtung für einen ersten Typ eines Zusammenbaus auf dem Drehtisch gegen eine Aufnahme- und Spannvorrichtung für einen anderen Typ eines Zusammenbaus austauschbar angeordnet ist, mit mehreren Arbeitsrobotern für Fügeaufgaben und mit mehreren mit bauteiltypspezifischen Greifern bestückbaren Arbeitsrobotern zur Entnahme von Bauteilen aus Bauteilspeichern und zum Laden der Aufnahme- und Spannvorrichtung mit diesen Bauteilen und deren Entladen sowie mit Greiferwechselspeichern für die bauteiltypspezifischen Greifer, wobei sowohl die Wechselstation für die Aufnahme- und Spannvorrichtung als auch die Greiferwechselspeicher für die Greifer derart am Außenrand der einen Gerätegarten bildenden Komponenten von Drehtisch, Arbeitsrobotern, Greiferwechselspeichern und Bauteilspeichern angeordnet sind, dass sie von außen mit Aufnahme- und Spannvorrichtungen und Greifern beschickbar sind, und wobei in der Mitte des Drehtisches mit den Arbeitsplätzen ein Arbeitsroboter für Fügeaufgaben platziert ist.

Mit der erfindungsgemäßen Fertigungsanlage lassen sich simultan unterschiedliche Typen von Zusammenbauten von Kraftfahrzeug-Karosserien herstellen. Dabei ist theoretisch die Anzahl der auf der Fertigungsanlage herstellbaren Typen nicht begrenzt. Unter "simultan" wird nicht nur ein vollständiger Mix verstanden, das heißt, dass alle verschiedenen Typen im absoluten Wechsel gefertigt werden, sondern auch eine Fertigung, bei der zunächst nur ein erster Typ gefertigt wird und dann ein zweiter Typ und dann ein dritter Typ und so weiter, was man "Batch-Fertigung"nennt. Diese Multiflexibilität der Fertigungsanlage beruht darauf, dass das Kernstück der Anlage für alle Typen unverändert bleibt, während die bauteilspezifischen Teile der Fertigungsanlage nach Bedarf ausgewechselt werden. Da die bauteiltypspezifischen Teile von außen zugeführt werden, ist die Zahl der simultan zu fertigenden Typen beliebig. Die Zuführung der bauteiltypspezifischen Teile von außen bedeutet auch, dass bei laufendem Betrieb der Fertigungsanlage Werker, die von außen die Teile heranschaffen, nicht in den Gefahrenbereich der Fertigungsanlage eintreten müssen.

Um Fügeaufgaben an den an den Arbeitsplätzen des Drehtisches gehaltenen Zusammenbauten erledigen zu können, sind üblicherweise außerhalb des Drehtisches Arbeitsroboter angeordnet. Um aber gleichzeitig auch auf der Innenseite der Zusammenbauten Fügeaufgaben erledigen zu können, wird in der Mitte des Drehtisches bzw. von oben kommend, d. h. die Aufnahme- und Spannvorrichtung übergreifend, ein weiterer Arbeitsroboter angeordnet .

Die Zuführung der bauteiltypspezifischen Aufnahme- und Spannvorrichtungen und der zugehörigen Greifer von außen wird erleichtert, wenn die Wechselstation für die gleichzeitige Aufnahme der Aufnahme- und Spannvorrichtungen und der zugehörigen Greifer eingerichtet ist. Bei dieser Ausgestaltung kann dann der zugeordnete Arbeitsroboter den Greifer von der an seinem Arbeitsplatz im Drehtisch bereits gehaltenen Aufnahme- und Spannvorrichtung entnehmen und dem Greiferwechselspeicher zuführen.

Sofern auf der Anlage eine Batch-Fertigung erfolgt, also die Aufnahme- und Spannvorrichtung und die Greifer nicht ständig gewechselt zu werden brauchen, reicht für die Umrüstung eines Arbeitsplatzes eine einfache Wechselstation aus, über die von außen unmittelbar die Aufnahme- und Spannvorrichtung mit dem zugehörigen Greifer zuführbar ist. Sofern jedoch ein häufiger Wechsel für die verschiedenen Typen erforderlich ist, lässt sich ein solcher Wechsel leichter mit einer Wechselstation für die Aufnahme- und Spannvorrichtungen durchführen, der als Wechseldrehtisch mit mehreren Speicherplätzen ausgebildet ist. Der Wechsel von Aufnahme- und Spannvorrichtung und Greifer an einem Arbeitsplatz des Drehtisches ist dann abgekoppelt von einem Wechsel einer Aufnahme- und Spannvorrichtung mit Greifer von außen.

Vorzugsweise weist der Wechseldrehtisch eine gegen den Drehtisch mit den Arbeitsplätzen Wechseleinheit, insbesondere eine ausfahrbare oder verschwenkbare Schiebe- oder Einschwenkeinheit für die Aufnahme- und Spannvorrichtungen auf. Auf diese Art und Weise ist ein erschütterungsfreier Wechsel möglich. Die Fügearbeiten brauchen deshalb dafür nicht unterbrochen zu werden.

Besonders vorteilhaft ist eine Fertigungsanlage, die nicht nur einsträngig sondern zweisträngig ausgebildet ist. Eine solche Anlage lässt sich nach einer Ausgestaltung der Erfindung dadurch realisieren, dass bei spiegelbildlicher Anordnung der verschiedenen Anlagekomponenten die für Fügeaufgaben eingerichteten Arbeitsroboter auf einem gemeinsamen Drehtisch zwischen den Drehtischen mit den Arbeitsplätzen angeordnet sind. Eine solche Fertigungsanlage ist zwar nicht ausschließlich, aber besonders vorteilhaft für die simultane Fertigung von zwei verschiedenen Typen (z.B. rechte/linke Teile) von Zusammenbauten geeignet.

Nach einer weiteren Ausgestaltung der Erfindung ist zwischen einer Abladestation für die gefügten Zusammenbauten und dem Drehtisch bzw. den Drehtischen mit den Arbeitsplätzen eine Endbearbeitungsstation mit mindestens einem auswechselbaren bauteiltypspezifischen Greifer und mindestens einem Arbeitsroboter für Fügeaufgaben angeordnet. In dieser Endbearbeitungsstation lassen sich dann ggf. unter Komplettierungen des Zusammenbaus mit weiteren Bauteilen die letzten Fügeaufgaben vornehmen, die in den Drehtischen mit den Arbeitsplätzen nicht erledigt werden konnten.

Bei einer zweisträngigen Anlage sollte die Endbearbeitungsstation zwei Arbeitsroboter für Fügeaufgaben auf einem Drehtisch und zwei dazu spiegelbildlich gegenüberliegende, bauteiltypspezifische Greifer aufweisen.

Der Endbearbeitungsstation ist vorzugsweise ein Arbeitsroboter zugeordnet, der für die Entnahme der fertigen Zusammenbauten samt sie haltender Greifer aus der Endbearbeitungsstation und für die separate Ablage der Zusammenbauten in einem Bauteilspeicher und der Greifer in einem Greiferwechselautomaten eingerichtet ist.

Im Folgenden wird die Erfindung anhand einer Zeichnung näher erläutert, die eine Fertigungsanlage in Draufsicht in schematischer Darstellung zeigt.

Die dargestellte Fertigungsanlage ist zweisträngig aufgebaut. Sie weist zwei Drehtische 1, 2 auf, die jeweils an drei Arbeitsplätzen 3, 4, 5 ,6, 7, 8 mit bauteiltypspezifischen Aufnahme- und Spannvorrichtungen 9, 10, 11, 12, 13, 14 für Zusammenbauten von Kraftfahrzeug-Karosserien, z. B. Seitenwänden, auswechselbar bestückbar sind. Sofern die Spannvorrichtungen 9 bis 14 für unterschiedliche Typen von Zusammenbauten ausgelegt sind, lassen sich maximal 6 verschiedene Typen von Zusammenbauten ohne Änderung der Bestückung der Arbeitsplätze 3 bis 8 simultan fertigen.

In der Mitte des Drehtisches 1, 2 ist ein Arbeitsroboter 15a, 15b für Fügeaufgaben an den Zusammenbauten angeordnet. Zwischen den Drehtischen 1, 2 ist ein weiterer Drehtisch 16 platziert, der mit zwei Arbeitsrobotern 17, 18 für weitere Fügeaufgaben an den von den Aufnahme- und Spannvorrichtungen 9 bis 14 gehaltenen Zusammenbauten des Drehtisches 1, 2 besetzt ist. Die Arbeitsroboter 17, 18 können auf dem Drehtisch 16 eine Eigendrehung ausführen. Während die Arbeitsroboter 15a, 15b für Fügearbeiten an den Innenseiten der Zusammenbauten, bzw. von oben kommend, d.h. die Aufnahme- und Spannvorrichtung umgreifend, bestimmt ist, sind die Arbeitsroboter 17, 18 für Fügeaufgaben an den Außenseiten der Zusammenbauten bestimmt. Die Anordnung der Arbeitsroboter 17, 18 auf dem Drehtisch 16 einerseits und ihre Fähigkeit zur Eigendrehung andererseits erlaubt es, sie optimal für die Fügeaufgaben sowohl an den Zusammenbauten im Drehtisch 1 als auch an den Zusammenbauten im Drehtisch 2 zu orientieren.

Jedem Drehtisch 1, 2 ist eine Wechselstation 19, 20 für bauteiltypspezifische Aufnahme- und Spannvorrichtungen zugeordnet. Die Wechselspeicher 19, 20 sind als Drehtische ausgebildet und weisen jeweils vier Speicherplätze 21, 22, 23, 24, 25, 26, 27, 28 auf, von denen drei Speicherplätze 21 bis 23, 25 bis 27 mit bauteiltypspezifischen Aufnahme- und Spannvorrichtungen 29, 30, 31, 32, 33, 34 bestückt sind. Der vierte leere Speicherplatz 24, 28 dient zur Aufnahme einer nicht mehr benötigten Aufnahme- und Spannvorrichtung von dem Drehtisch 1, 2.

Neben dem Drehtisch 16 mit den beiden Arbeitsrobotern 17, 18 für Fügeaufgaben ist eine Endbearbeitungsstation 35 angeordnet, die einen Drehtisch 36 mit zwei darauf drehbar angeordneten Arbeitsrobotern 37, 38 aufweist. Auf beiden Seiten des Drehtisches 36 sind zwei stationäre aber auswechselbare, bauteiltypspezifische Greifer 39, 40 für die von den Drehtischen 1, 2 kommenden weitgehend fertig gefügten Zusammenbauten angeordnet. Die auswechselbaren Greifer 39, 40 können einem Greiferwechselautomaten 44 entnommen werden. In der Endbearbeitungsstation 35 können aus einem Bauteilspeicher 41 entnommene weitere Bauteile zur Komplettierung der Zusammenbauten in diese eingefügt werden.

Zur Entnahme der weiteren Bauteile aus dem Bauteilspeicher 41 und der komplettierten Zusammenbauten aus der Endbearbeitungsstation 35 dient ein Arbeitsroboter 42, der die Greifer 39, 37 mitsamt der Zusammenbauten der Endbearbeitungsstation 35 entnimmt, die Zusammenbauten an einer Abladestation 43 ablegt und im Bedarfsfall wegen anderer Typen von Zusammenbauten die Greifer 39, 40 in dem Greiferwechselautomaten 44 austauscht. Der Greiferwechselautomat 44 enthält auch passende Greifer für die weiteren Bauteile mit denen der Arbeitsroboter 42 bestückt werden kann.

Jedem Drehtisch 1, 2 mit seinen Arbeitsplätzen 3 - 8 ist ein Bauteilspeicher 45, 46 mit bauteiltypspezifischen Speicherplätzen 47, 48, 49, 50, 51, 52 zugeordnet. Zum Laden der Halte- und Spannvorrichtungen 9 - 14 mit Bauteilen aus den Speichern 45, 46 dient ein Arbeitsroboter 53, 54, der linear zwischen den Speichern 45, 46 und den Drehtischen 1, 2 verfahrbar ist. Auf seinem Verfahrweg ist eine stationäre Fügestation 55, 56 angeordnet, mit der erste Fügeoperationen am vom Arbeitsroboter 53, 54 gehaltenen Bauteil vorgenommen werden können.

Zum Übergeben der an den Arbeitsplätzen 3 bis 8 der Drehtische 1, 2 weitgehend fertig gefügten Zusammenbauten an die Endbearbeitungsstation 35 dienen Arbeitsroboter 57, 58. Um die Arbeitsroboter 57, 58 mit unterschiedlichen Greifern für die verschiedenen Typen von Zusammenbauten bestücken zu können, ist ihnen jeweils ein Greiferwechselspeicher 59, 60 in Form eines Drehtisches zugeordnet. Diese Greiferwechselspeicher 59, 60 sind mit den gerade nicht benötigten Greifern beladen, die die Arbeitsroboter 57, 58 von den Halte- und Spannvorrichtungen 9 bis 14 der Drehtische 1, 2 abnehmen.

Den linear verfahrbaren Arbeitsrobotern 53, 54, mit denen die verschiedenen Typen von Zusammenbauten den Bauteilspeichern 46, 47 entnommen und an die Aufnahme- und Spannvorrichtungen 9 bis 14 der Drehtische 1, 2 übergeben werden, sind ebenfalls als Drehtische ausgebildete Greiferwechselspeicher 61, 62 zugeordnet.

Die gesamte Fertigungsanlage mit ihren einen Gerätegarten bildenden Komponenten 1, 2, 16, 19, 20, 41 bis 46, 53, 54, 57 bis 62 ist von einer Schutzeinrichtung G umgeben. Nur an wenigen Stellen, wo bauteiltypspezifische Komponenten, wie Greifer und Aufnahme- und Spannvorrichtungen oder kleinere Bauteile, in den Gerätegarten eingeführt werden müssen, ist er über Tore T₁, T₂, T₃, T₄, T₅, T₆, T₇, T₈ zugänglich, so dass Werker nicht in den inneren Gefahrenbereich des Gerätegartens bei laufender Produktion eintreten müssen, um die einzelnen Komponenten bauteiltypspezifisch ausrüsten und Bauteile zuzuführen. Alle Arbeiten werden von außerhalb des Gerätegartens erledigt. Im Innern arbeiten die Komponenten "autonom ".

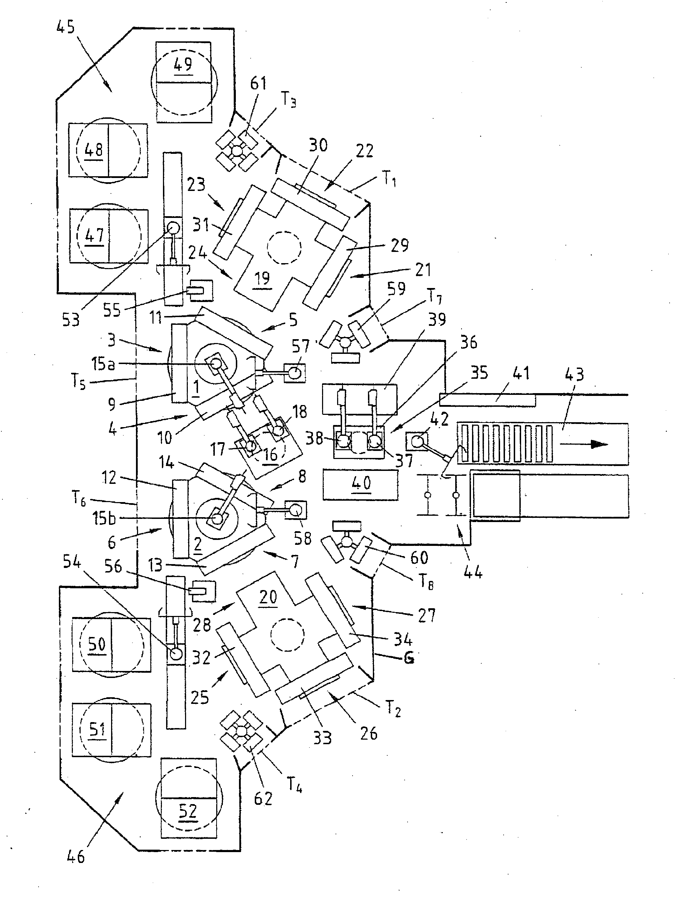

In der in der Zeichnung dargestellten Ausrüstung können auf der Anlage sowohl im oberen als auch im unteren Strang sechs verschiedene Typen gefertigt werden, ohne dass von außen weitere Komponenten zugeführt werden müssen. So sind die Drehtische 1, 2 bereits jeweils mit Halte- und Spannvorrichtungen 3 bis 12 für drei verschiedene Typen von Zusammenbauten ausgerüstet. Soll ein weiterer Typ gefertigt werden, dann wird die nicht mehr benötigte Halte- und Spannvorrichtung, z.B. die Spannvorrichtung 11, 13 mitsamt ihres vom Arbeitsroboter 57, 58 ggf. dem Greiferwechselspeicher 59, 60 entnommenen Greifers mittels eines nicht dargestellten Ladetisches vom Drehtisch 1, 2 auf den leeren Speicherplatz 24, 28 der Wechselstation 19, 20 überführt. Nach Drehen der Wechselstation 19, 20 kann dann die benötigte neue Aufnahme- und Spannvorrichtung, z.B. 29, 34 mitsamt des zugehörigen Greifers mittels des Ladetisches auf den Drehtisch 1, 2 übergesetzt werden. Von der Aufnahme- und Spannvorrichtung wird dann mittels des Arbeitsroboters 57, 58 der Greifer abgenommen und ggf. im Greiferwechselspeicher 59, 60 abgelegt. Wird die dem Drehtisch 1, 2 entnommene Halte- und Spannvorrichtung 11, 13 überhaupt nicht mehr benötigt, dann kann sie aus der Wechselstation 19, 20 mittels eines von einem Werker gefahrenen Ladegerätes über das geöffnete Tor T₁, T₂ nach außen entfernt werden und der Speicherplatz mit einer neuen Halte- und Spannvorrichtung für einen neuen Typ bestückt werden, die demnächst benötigt wird. Die neue Halte- und Spannvorrichtung wird von außen mittels des vom Werker gefahrenen Ladegerätes über das geöffnete Tor T₁, T₂ an die Wechselstation übergeben.

Mittels der Arbeitsroboter 53, 54 werden die Aufnahme- und Spannvorrichtungen 9 bis 14 der Drehtische 1, 2 mit verschiedenen Typen von Zusammenbauten aus den Bauteilspeichern 45, 46 beladen. Dafür können die Arbeitsroboter 53, 54 aus den Greiferwechselspeichern 61, 62 mit den passenden Greifern bestückt werden. Die Greiferwechselspeicher 61, 62 werden von außen über die geöffneten Tore T₃, T₄ von einem Werker mit verschiedenen Typen von Greifern beladen. Die an von den Halte- und Spannvorrichtungen 9 bis 14 gehaltenen unfertigen Zusammenbauten können mit weiteren Bauteilen ggf. von Werkern über benachbarte Tore T₅, T₆ bestückt werden. Erste Fügearbeiten an den Zusammenbauten können auf ihrem Transportweg zu den Drehtischen 1, 2 an den stationären Fügestationen erledigt werden. Die hauptsächlichen Fügearbeiten werden aber an den von den Halte- und Spannvorrichtungen 9 bis 14 gehaltenen Zusammenbauten von den zentralen Arbeitsrobotern 15a, 15b und den äußeren Arbeitsrobotern 17, 18 erledigt. Dafür werden die Arbeitsroboter 17, 18 auf ihrem Drehtisch 16 optimal zu den zu fügenden Zusammenbauten orientiert. Eine optimale Orientierung ist möglich, weil die Arbeitsroboter 17, 18 nicht nur um ihre eigenen Drehachsen sondern auch auf dem Drehtisch 16 gedreht werden können, so dass die geeigneten Fügewerkzeuge auch die richtige Orientierung zu den Zusammenbauten haben.

Nach beendeter Fügung entnehmen die Arbeitsroboter 57, 58 mit passenden, den Greiferwechselspeichern 59, 60 entnommenen Greifern die Zusammenbauten abwechselnd den Halte- und Spannvorrichtungen 9 bis 14 der Drehtische 1, 2. Während beispielsweise der Arbeitsroboter 58 einen Zusammenbau der Aufnahme- und Spannvorrichtung 14 entnimmt, findet an dem fügegerecht zu den Arbeitsrobotern 17, 18 ausgerichteten Zusammenbau noch Fügearbeit statt. Die entnommenen Zusammenbauten werden an die stationären Greifer 39, 40 in der Endbearbeitungsstation 35 übergeben, wo sie ggf. nach Komplettierung mit weiteren Bauteilen aus dem Bauteilspeicher 41 mittels der Arbeitsroboter 37, 38 fertig gefügt werden. Auch in diesem Fall lassen sich die Arbeitsroboter 37, 38 wegen der Drehung des Drehtisches 36 und ihrer Eigendrehung auf dem Drehtisch 36 optimal zu dem vom Greifer 39 bzw. 40 gehaltenen Zusammenbau orientieren. Nach endgültiger Fertigstellung entnimmt der Arbeitsroboter 42 den Zusammenbau mitsamt Greifer 39, 40 der Endbearbeitungsstation 35 und legt den Zusammenbau in der Ablagestation 43 ab. In Abhängigkeit von dem danach der Endbearbeitungsstation 35 zu entnehmenden Typ des Zusammenbaus behält der Arbeitsroboter 42 den Greifer oder wechselt ihn in dem Greiferwechselautomaten 44 aus.

## Patentansprüche

1. Multiflexible Fertigungsanlage für aus mehreren Bauteilen zu fügeende Zusammenbauten von Kraftfahrzeug-Karosserien oder Karosserie-Komponenten mit einem Drehtisch (1, 2), auf dem an mehreren Arbeitsplätzen (3 bis 8) Aufnahme- und Spannvorrichtungen (9 bis 14) für gleiche und/oder unterschiedliche Typen von Zusammenbauten auswechselbar angeordnet sind, mit einer neben dem Drehtisch (1, 2) angeordneten Wechselstation (19, 20), mit der eine Aufnahme- und Spannvorrichtung (9 bis 14) für einen ersten Typ eines Zusammenbaus auf dem Drehtisch (1, 2) gegen eine Aufnahme- und Spannvorrichtung (29 bis 34) für einen anderen Typ eines Zusammenbaus austauschbar ist, mit mehreren Arbeitsrobotern (17, 18, 37, 38) für Fügeaufgaben und mit mehreren mit bauteiltypspezifischen Greifern bestückbaren Arbeitsrobotern (53, 54, 57, 58) zur Entnahme von Bauteilen aus Bauteilspeichern (45, 46) und zum Laden der Aufnahme- und Spannvorrichtungen (9 bis 14) mit diesen Bauteilen und deren Entladen sowie mit Greiferwechselspeichern (59, 60, 61, 62) für die bauteiltypspezifischen Greifer, wobei sowohl die Wechselstation (19, 20) für die Aufnahmen und Spannvorrichtungen (29 bis 34) als auch die Greiferwechselspeicher (59 bis 62) für die Greifer derart am Außenrand der einen Gerätegarten bildenden Komponenten von Drehtisch (1, 2), Arbeitsrobotern (53, 54, 57, 58, 42), Greiferwechselspeichern (59 bis 62) und Bauteilspeichern (45, 46, 41) angeordnet sind, dass sie von außen mit Aufnahme und Spannvorrichtungen (29 bis 34) und Greifern beschickbar sind,
**dadurch gekennzeichnet, dass**
in der Mitte des Drehtisches (1, 2) mit den Arbeitsplätzen (3 bis 8) ein Arbeitsroboter (15a, 15b) für Fügeaufgaben platziert ist.

2. Fertigungsanlage nach Anspruch 1,
**dadurch gekennzeichnet, dass**
die Wechselstation (19, 20) für die gleichzeitige Aufnahme der Aufnahme- und Spannvorrichtungen (29 bis 34) und der zugehörigen Greifer eingerichtet ist.

3. Fertigungsanlage nach einem der Ansprüche 1 oder 2,
**dadurch gekennzeichnet, dass**
die wechselstation (19, 20) für die Aufnahme- und Spannvorrichtungen (29 bis 34) als Wechseldrehtisch mit mehreren Speicherplätzen (21 bis 27) ausgebildet ist.

4. Fertigungsanlage nach Anspruch 3,
**dadurch gekennzeichnet, dass**
der Wechseldrehtisch (19, 20) eine mit dem Drehtisch (1, 2) mit den Arbeitsplätzen (3 bis 8) zusammenwirkende Werkzeugwechseleinheit zum Wechseln der Aufnahme- und Spannvorrichtungen (9 bis 14, 29 bis 34) aufweist.

5. Fertigungsanlage nach einem der Ansprüche 1 bis 4,
**dadurch gekennzeichnet, dass**
bei spiegelbildlicher Anordnung der verschiedenen Anlagenkomponenten (1, 2, 19, 20, 45, 46, 59 bis 62) die für Fügeaufgaben eingerichteten Arbeitsroboter (17, 18) zwischen den Drehtischen (1, 2) mit den Arbeitsplätzen (3 bis 8) auf einem gemeinsamen Drehtisch (16) angeordnet sind.

6. Fertigungsanlage nach einem der Ansprüche 1 bis 5,
**dadurch gekennzeichnet, dass**
zwischen einer Abladestation (43) für die gefügten Zusammenbauten und dem Drehtisch bzw. den Drehtischen (1, 2) mit den Arbeitsplätzen (3 bis 8) eine Endbearbeitungsstation (35) mit mindestens einem auswechselbaren, bauteiltypspezifischen Greifer (39, 40) und mindestens einem Arbeitsroboter (37, 38) für Fügeaufgaben angeordnet ist.

7. Fertigungsanlage nach Anspruch 6,
**dadurch gekennzeichnet, dass**
die Endbearbeitungsstation (35) zwei Arbeitsroboter (37, 38) für Fügeaufgaben auf einem Drehtisch (36) und zwei dazu spiegelbildlich gegenüberliegende, bauteiltypspezifischen Greifer (39, 40) aufweist.

8. Fertigungsanlage nach Anspruch 6 oder 7,
**dadurch gekennzeichnet, dass**
der Endbearbeitungsstation (35) ein Arbeitsroboter (42) zugeordnet ist, der für die Entnahme der fertigen Zusammenbauten samt sie haltender Greifer aus der Endbearbeitungsstation (35) und die separate Ablage der Zusammenbauten in einem Bauteilspeicher (43) und der Greifer in einem Greiferwechselautomaten (44) eingerichtet ist.

9. Fertigungsanlage nach Anspruch 8,
**dadurch gekennzeichnet, dass**
der Endbearbeitungsstation (35) ein Bauteilspeicher (41) zugeordnet ist, aus dem mit dem Arbeitsroboter (42) weitere Bauteile entnehmbar und in die bauteiltypischen Greifer (39, 40) einlegbar sind.

## Claims

1. Multi-flexible manufacturing plant for assemblies of vehicle bodies or body components to be joined together from several pre-fabricated parts, comprising a turntable (1, 2) on which pick-up and clamping devices (9 to 14) for alike and/or different types of assemblies are interchangeably arranged at several working locations (3 to 8), having an interchange station (19, 20) arranged next to the turntable (1, 2) with which a pick-up and clamping device (9 to 14) for a first type of assembly on the turntable (1, 2) can be replaced by a pick-up and clamping device (29 to 34) for another type of assembly, with several processing robots (17, 18, 37, 38) for joining operations and with several processing robots (53, 54, 57, 58) which can be fitted with grippers for specific types of pre-fabricated parts in order to remove pre-fabricated parts from pre-fabricated part magazines (45, 46) and to load and unload the pick-up and clamping devices (9 to 14) with these pre-fabricated parts, as well as with gripper interchange magazines (59, 60, 61, 62) for the specific pre-fabricated part grippers, wherein both the interchange station (19, 20) for the pick-up and clamping devices (29 to 34) and the gripper interchange magazines (59 to 62) for the grippers are arranged at the outer edge of the components, forming an equipment cluster, of turntable (1, 2), processing robots (53, 54, 57, 58, 42), gripper interchange magazines (59 to 62) and pre-fabricated part magazines (45, 46, 41), so that they can be supplied from outside with pick-up and clamping devices (29 to 34) and grippers,
**characterized in that**
a processing robot (15a, 15b) for joining operations is positioned in the centre of the turntable (1, 2) with the working locations (3 to 8).

2. Manufacturing plant according to Claim 1,
**characterized in that**
the interchange station (19, 20) is set up for the simultaneous uptake of the pick-up and clamping devices (29 to 34) and the associated grippers.

3. Manufacturing plant according to any of Claims 1 or 2,
**characterized in that**
the interchange station (19, 20) for the pick-up and clamping devices (29 to 34) is constructed as an exchange turntable with several storage locations (21 to 27).

4. Manufacturing plant according to Claim 3,
**characterized in that**
the exchange turntable (19, 20) has a tool exchange unit cooperating with the turntable (1, 2) with the working locations (3 to 8) for changing the pick-up and clamping devices (9 to 14, 29 to 34).

5. Manufacturing plant according to any of Claims 1 to 4,
**characterized in that**
with configuration of the different plant components (1, 2, 19, 20, 45, 46, 59 to 62) in mirror image, the processing robots (17, 18) set up for joining operations are arranged on a common turntable (16) between the turntables (1, 2) with the working locations (3 to 8).

6. Manufacturing plant according to any of Claims 1 to 5,
**characterized in that**
a finishing station (35) with at least one interchangeable gripper (39, 40) for specific types of pre-fabricated parts and at least one processing robot (37, 38) for joining operations is arranged between an unloading station (43) for the joined assemblies and the turntable or the turntables (1, 2) with the working locations (3 to 8).

7. Manufacturing plant according to Claim 6,
**characterized in that**
the finishing station (35) has two processing robots (37, 38) for joining operations on a turntable (36) and two grippers (39, 40) for specific types of pre-fabricated parts facing these in mirror image.

8. Manufacturing plant according to Claim 6 or 7,
**characterized in that**
the finishing station (35) is assigned a processing robot (42), which is set up for the removal of the finished assemblies including grippers holding them from the finishing station (35) and for the separate placement of the assemblies in a pre-fabricated part magazine (43) and of the grippers in an automatic gripper changer (44).

9. Manufacturing plant according to Claim 8,
**characterized in that**
the finishing station (35) is assigned a pre-fabricated part magazine (41), from which further pre-fabricated parts can be removed with the processing robot (42) and inserted into the grippers (39, 40) for specific types of pre-fabricated parts.

## Revendications

1. Installation de fabrication multiflexible pour construction par assemblage de plusieurs structures de carrosseries de véhicules automobiles ou de composants de carrosseries, avec une table rotative (1, 2), sur laquelle sont disposés, à plusieurs stations de travail (3 à 8), des dispositifs de réception et de serrage (9 à 14) interchangeables, pour des types d'assemblages semblables et / ou différents, avec une station de changement (19, 20), disposée à côté de la table rotative (1, 2), au moyen de laquelle un dispositif de réception et de serrage (9 à 14) pour un premier type d'assemblage peut être échangé, sur la table rotative (1, 2), contre un dispositif de réception et de serrage (29 à 34) pour un autre type d'assemblage, avec plusieurs robots de travail (17, 18, 37, 38) pour opérations d'assemblage, et avec plusieurs robots de travail (53, 54, 57, 58), pouvant être équipés avec plusieurs pinces de robots, spécifiques aux composants, pour le prélèvement de ces composants à partir d'un magasin de stockage de composants (45, 46) et pour le chargement des dispositifs de réception et de serrage (9 à 14) avec ces composants et le déchargement de ces derniers, ainsi qu'avec des magasins de changement de pinces de robots (59, 60, 61, 62) pour les pinces de robots spécifiques aux composants, les stations de changement (19, 20) pour les dispositifs de réception et de serrage (29 à 34) ainsi que les magasins de changement pour les pinces de robots (59 à 62) étant disposés sur le bord extérieur des composants de la table rotative (1, 2), qui forment un jardin d'appareils, robots de travail (53, 54, 57, 58, 42), magasins de changement de pinces de robots (59 à 62) et magasin de stockage de composants (45, 46, 41), qui peuvent être équipés, à partir de l'extérieur, avec des dispositifs de réception et de serrage (29 à 34) et des pinces de robots, **caractérisée en ce que,** pour les opérations d'assemblage, un robot de travail (15a, 15b) est placé au centre de la table rotative (1, 2), avec les stations de travail (3 à 8).

2. Installation de fabrication selon la revendication 1, **caractérisée en ce que** la station de changement (19, 20) est aménagée pour la réception simultanée des dispositifs de réception et de serrage (29 à 34) et des pinces de robots y associées.

3. Installation de fabrication selon revendication 1 ou 2, **caractérisée en ce que** la station de changement (19, 20) est conçue en tant que table rotative avec plusieurs stations de stockage (21 à 27) pour les dispositifs de réception et de serrage (29 à 34).

4. Installation de fabrication selon la revendication 3, **caractérisée en ce que** la table rotative de changement (19, 20) présente une unité de changement d'outils, qui coopère avec les stations de travail (3 à 8) pour le changement des dispositifs de réception et de serrage (9 à 14, 29 à 34).

5. Installation de fabrication selon l'une des revendications 1 à 4, **caractérisée en ce que**, dans une disposition spéculaire des différents composants de l'installation (1, 2, 19, 20, 45, 46, 59 à 62), les robots de travail (17, 18), aménagés pour des opérations d'assemblage, sont disposés sur une table rotative commune (16), entre les tables rotatives (1, 2), avec les stations de travail (3 à 8).

6. Installation de fabrication selon l'une des revendications 1 à 5, **caractérisée en ce que**, entre une station de déchargement (43) de structures assemblées et la table rotative, respectivement les tables rotatives (1, 2), avec les stations de travail (3 à 8), est disposée une station de traitement final (35) avec au moins une pince de robot (39, 40) spécifique aux types de composants, et au moins un robot de travail (37, 38) pour des opérations d'assemblage.

7. Installation de fabrication selon la revendication 6, **caractérisée en ce que** la station de traitement final (35) présente deux robots de travail (37, 38) pour des opérations d'assemblage sur une table rotative (36) et deux pinces de robots (39, 40) spécifiques aux types de composants, qui sont disposées, réfléchies, l'une en face de l'autre.

8. Installation de fabrication selon la revendication 6 ou 7, **caractérisée en ce qu'**à la station de traitement final (35) est associé un robot de travail (42), qui est aménagé pour prélever de la station de traitement final (35) les structures finies, y comprises les pinces de robots les maintenant, et pour déposer séparément les structures dans un dépôt de stockage de composants (43) et les pinces de robots dans un automate de changement de pinces (44).

9. Installation de fabrication selon la revendication 8, **caractérisée en ce qu'**à la station de traitement final (35) est associé un dépôt de stockage de composants (41), à partir duquel d'autres composants peuvent être prélevés avec le robot de travail (42) et insérés dans les pinces de robots (39, 40) typiques pour ces composants.
